# EUROPÄISCHE PATENTANMELDUNG

(11) **EP 1 912 302 A2**
(43) Veröffentlichungstag der Anmeldung: **16.04.2008**
(21) Anmeldenummer: 07118394.1
(22) Anmeldetag: 12.10.2007
(51) Int. Cl.: H02G 3/04, H02G 3/12

(54) **Einrichtung zum Anschließen von Arbeitsplätzen an ein Energie-, Daten- und/oder Kommunikationsnetz sowie Träger- und Montagekanal für eine solche Einrichtung**

(30) Priorität: 14.10.2006 DE 202006015764 U
(71) Anmelder: OBO Bettermann GmbH & Co. KG, 58710 Menden (DE)
(72) Erfinder: Jordan, Ernst-Günther, 58710 Menden (DE)
(74) Vertreter: Haverkamp, Jens

(57) **Zusammenfassung**

Eine Einrichtung 1 zum Anschließen von in einem Raum eines Gebäudes befindlichen Arbeitsplätzen an ein Energie-, Daten- und Kommunikationsnetz umfasst wenigstens einen von einer Raumdecke abgehängten, aus zwei miteinander durch einen Steg 5 verbundenen Seitenteilen 3, 4 gebildeten Träger- und Montagekanal 2. Der Träger- und Montagekanal 2 verfügt über einen Kanal zur Leitungsführung sowie über Montageelemente 3, an denen Einbaugeräte mechanisch an den Träger- und Montagekanal 2 anschließbar sind. Die Einrichtung 1 umfasst ferner ein oder mehrere in dem Träger- und Montagekanal 2 geführte Kabel eines Energie-, Daten- und/oder Kommunikationsnetzes sowie zumindest eine an einem oder mehreren Befestigungselementen des Träger- Montagekanals 2 mechanisch angeschlossene und elektrisch mit den Energie-, Daten- und/oder Kommunikationsnetz verbundene Anschlussdose als einem Arbeitsplatz zugeordneten Stelle zur Erlangung eines Zuganges zu dem Energie-, Daten- und/oder Kommunikationsnetz. Beschrieben ist ferner ein Träger- und Montagekanal 2 für eine solche Einrichtung.

## Beschreibung

Die Erfindung betrifft eine Einrichtung zum Anschließen von in einem Raum eines Gebäudes befindlichen Arbeitsplätzen an ein Energie-, Daten- und/oder Kommunikationsnetz. Ferner betrifft die Erfindung einen Träger- und Montagekanal für eine solche Einrichtung.

Zum Anschließen von in einem Raum befindlichen Arbeitsplätzen an ein Energie-, Daten- und/oder Kommunikationsnetz dienen in Abhängigkeit von der Größe des Raumes, in dem sich die Arbeitsplätze befinden, entweder entlang den Raumwänden geführte Kabelkanäle oder Unterflurkabelkanäle. Unterflurkabelkanäle verfügen in gewissen Abständen über Unterfluranschlussdosen als Schnittstellen, um einen bzw. typischerweise mehrere Arbeitsplätze an das Energie-, Daten- und/oder Kommunikationsnetz anzuschließen. In größeren Büros erfolgt die gesamte Arbeitsplatzversorgung und somit die Energie-, Daten- und die Kommunikationsversorgung über ein solches Unterflurkabelsystem. Unterflurkabelsysteme werden mit der Planung der Raumnutzung geplant und dann zusammen mit der Erstellung des Fußbodens eingebaut, beispielsweise im Estrich vergossen. Auch wenn man mit einer derartigen Unterflurverkabelung positive Erfahrungen gemacht hat, hat ein solches System zum Nachteil, dass eine Raumnutzung und eine Verteilung der Arbeitsplätze in Abhängigkeit von der Anordnung der Unterfluranschlussdosen vorgenommen werden muss, wenn man nicht am Boden liegende Anschluss- und Verbindungskabel in Kauf nehmen möchte. Daher erfolgt eine Anordnung der Unterfluranschlussdosen entweder in Abhängigkeit von der ersten geplanten Nutzung eines Raumes oder entsprechend einem vorgegebenen Raster, um möglichst viele Raumnutzungsmöglichkeiten bzw. Möglichkeiten einer Anordnung von Arbeitsplätzen zu gestatten. Ist ein solches Unterfluranschlusssystem installiert, kann dieses nur mit einer Neuerstellung des Fußbodens geändert werden.

Ausgehend von diesem diskutierten Stand der Technik liegt der Erfindung daher die Aufgabe zugrunde, eine eingangs genannte Einrichtung dergestalt auszubilden, dass mit dieser die zu dem vordiskutierten Stand der Technik aufgezeigten Nachteile vermieden sind, mithin diese Einrichtung eine größere Variabilität in der Anordnung von Arbeitsplätzen in einem Raum auch ohne Verlegung von Anschluss- oder Verbindungskabeln am Boden gestattet.

Diese Aufgabe wird erfindungsgemäß durch eine eingangs genannte Einrichtung gelöst, welche Einrichtung umfasst:
- wenigstens einen von einer Raumdecke abgehängten, aus zwei miteinander durch wenigstens einen Steg verbundenen Seitenteilen gebildeten Träger- und Montagekanal mit wenigstens einem Kanal zur Leitungsführung und mit Montageelementen, an denen Einbaugeräte mechanisch an den Träger- und Montagekanal anschließbar sind,
- ein oder mehrere in dem Träger- und Montagekanal geführte Kabel eines Energie-, Daten- und/oder Kommunikationsnetzes und
- zumindest eine an einem oder mehreren Befestigungselementen des Träger- und Montagekanals mechanisch angeschlossene und mit dem Energie-, Daten- und/oder Kommunikationsnetz verbundene Anschlussdose als einem Arbeitsplatz zugeordnete Schnittstelle zur Erlangung eines Zuganges zu dem Energie-, Daten- und/oder Kommunikationsnetz.

Diese Einrichtung ist konzipiert, damit das Energie-, Daten- und/oder Kommunikationsnetz bzw. die diesem Netz zugehörigen Leitungen oberhalb der Arbeitsplätze geführt sind. Hierzu dient ein Träger- und Montagekanal, gebildet durch zwei miteinander durch zumindest einen Steg verbundene Seitenteile, die gemäß einem bevorzugten Ausführungsbeispiel als Seitenwände ausgebildet sind. Der Träger- und Montagekanal verfügt über wenigstens einen Kanal zur Leitungsführung, wobei beispielsweise der die Seitenwände verbindende Steg zusammen mit den angrenzenden Seitenwänden oder Seitenwandabschnitten als Kanal zur Leitungsführung dienen kann. Die Leitungen liegen bei einer solchen Ausgestaltung auf der Oberseite dieses Steges auf, bzw. werden von dem Steg getragen, gegebenenfalls unter Zwischenschaltung weiterer Elemente. Gleichsam können die Seitenteile, beispielsweise die Seitenwände durch mehrere Stege miteinander verbunden sein. Hierdurch können mehr-etagige Kanäle gebildet werden. Anstelle der Verbindung der beiden Seitenteile durch einen durchgehenden Steg besteht ebenfalls die Möglichkeit, einen solchen Steg durch einzelne Stegabschnitte auszubilden, die voneinander getrennt sind. Ferner verfügt der Träger- und Montagekanal über Montageelemente, an denen Einbaugeräte mechanisch anschließbar sind. Bei diesen Einbaugeräten kann es sich um unterschiedliche Geräte handeln, beispielsweise Leuchten, Sensoren, etwa Bewegungssensoren, Kameras oder dergleichen. Der Träger- und Montagekanal verfügt des Weiteren über zumindest eine an den Montageelementen mechanisch angeschlossene Anschlussdose. Die Anschlussdose selbst ist elektrisch mit dem Energie-, Daten- und/oder Kommunikationsnetz verbunden, und zwar mit demjenigen Netz oder mit denjenigen Netzen, für welches die Anschlussdose geeignet ist. In einem bevorzugten Ausführungsbeispiel ist vorgesehen, eine einzige Anschlussdose bereitzustellen, die als Schnittstelle zum dem Energie-, Daten- und Kommunikationsnetz dient. Gleichfalls ist es möglich, Anschlussdosen bereitzustellen, die nur dem einen oder anderen Netz oder einer Teilmenge der Netze zugeordnet ist. Die Anschlussdosen und die Einbaugeräte sind vorzugsweise mechanisch werkzeuglos an dem Träger- und Montagekanal befestigbar und gleichermaßen werkzeuglos von diesen wieder lösbar.

Das Anordnen des Träger- und Montagekanals unterhalb der Decke hat zum Vorteil, dass die Anschlussdosen und/oder die weiteren Einbaugeräte in quasi beliebigen Konfigurationen angeordnet werden können, ohne dass dieses für die Nutzer des Raumes störend wäre. Von besonderem Vorteil ist, dass ein solcher Träger- und Montagekanal zusammen mit weiteren gleichfalls als Träger einer abgehängten Decke dienen kann. Mehrere Träger- und Montagekanäle werden zu diesem Zweck beispielsweise zur Ausbildung eines Rasters angeordnet mit dem Ziel, dass in jede Rasteröffnung eine Deckenplatte eingelegt wird. Diese Träger- und Montagekanäle sind sodann Teil einer abgehängten Decke. Die beschriebenen Träger- und Montagekanäle können ebenfalls zusammen mit anderen, herkömmlichen Trägern zum Ausbilden einer abgehängten Decke dienen. Zum Anschließen der von einem solchen Träger- und Montagekanal zu tragenden Deckenelemente verfügt dieser typischer Weise über von den Außenseiten der Seitenwände abragende Stege nach Art jeweils eines Flansches, zum Auflegen von Deckenplatten. Ein solches Träger- und Montageprofil verfügt über solche Anschlussmittel, die zum Anschließen der abgehängten Deckenelemente geeignet oder notwendig sind.

Ein solcher in eine abgehängte Decke integrierter Träger- und Montagekanal ist an beliebiger Stelle zugänglich, und zwar dahingehend, dass quasi an beliebiger Stelle eine Anschlussdose oder auch ein anderes Einbaugerät montiert werden kann. Die Verbindung zum Arbeitsplatz hin erfolgt von dem Träger- und Montagekanal herab über ein geeignetes Anschlusskabel oder einen Anschlusskabelsatz. Die Versorgung kann ebenfalls über eine Mediensäule erfolgen, die sich beispielsweise bis zu dem Träger- und Montagekanal erstreckt. Da typischer Weise bei einer abgehängten Decke die einzelnen Deckenelemente ohne Weiteres von den Trägern lösbar sind, können diese herausgenommen werden, um auf diese Weise den Zugang zu dem der Leitungsführung dienenden Kanal, der typischer Weise von oben zugänglich ist, zu schaffen. Auf diese Weise ist ein nachträgliches Verlegen von Kabeln ohne Weiteres möglich. Gleiches gilt für unter Umständen notwendig werdende Ergänzungs- oder Reparaturmaßnahmen an dem Energie-, Daten- und/oder Kommunikationsnetz.

Um zu gewährleisten, dass die in dem Träger- und Montagekanal geführten Leitungen den Brandschutzerfordernissen genügend verlegt sind, ist gemäß einem Ausführungsbeispiel vorgesehen, die Leitungen auf einer Brandschutzplatte anzuordnen, die beispielsweise auf einem die beiden Seitenteile verbindenden Steg des Kanals aufliegt.

Typischerweise sind in Abständen oder in der gesamten Längserstreckung der Seitenwände des Träger- und Montagekanals folgend Montageelemente vorgesehen, an denen Anschlussdosen und andere Einbaugeräte angebracht werden können. Bevorzugt ist ein Ausführungsbeispiel, gemäß dem der die Seitenwände verbindende Steg zwischen dem unteren Abschluss der Seitenwände und dem oberen Abschluss der Seitenwände angeordnet ist, mithin der Träger- und Montagekanal eine H-förmige Querschnittsprofilierung aufweist. Die durch den Steg gebildete obere Teilkammer dient der Leitungsführung; die untere Teilkammer trägt das oder die Montageelemente zum Anschließen der Anschlussdosen bzw. der zusätzlichen Einbaugeräte. In Abständen sind Durchbrechungen in den Steg eingebracht, um eine elektrische Verbindung zwischen einem Einbaugerät und/oder einer Anschlussdose zu den Kabeln des Energie-, Daten- und/oder Kommunikationsnetzes zu erhalten.

Um die gewünschte Variabilität hinsichtlich des Anordnens einer Anschlussdose oder auch anderer Einbaugeräte zu erhalten, ist es möglich, am Ort des Anschlusses der Anschlussdose oder des Einbaugerätes auch die elektrische Verbindung zu der jeweiligen Energie-, Daten- und/oder Kommunikationsleitung herzustellen. Gleichfalls ist es möglich, in einem Abschnitt eines Träger- und Montagekanals eine feste Verdrahtung vorzunehmen und die eine oder die mehreren, diesem Abschnitt zugeordneten Anschlussdosen und zusätzlichen Einbaugeräte mit einem entsprechend lang gehaltenen Anschlusskabel auszustatten, so dass diese innerhalb des Abschnittes des Träger- und Montagekanals quasi an beliebiger Stelle angeordnet werden können.

Ein solches Träger- und Montageprofil kann als Abschnitt komplett vorinstalliert sein, bevor dieses an der Decke abgehängt wird. Besteht ein abgehängtes Deckensystem aus solchen einzelnen vorinstallierten Abschnitten, ist es zweckmäßig, an den Stößen bzw. Verbindungsseiten der Träger- und Montagekanäle Steckverbindungsteile anzuordnen, in die zum Kontaktieren beispielsweise der elektrischen Installation des an diesen Träger- und Montagekanal anzuschließenden Träger- und Montagekanals komplementäre Steckverbindungsteile eingreifen. Auf diese Weise ist eine Montage auch komplizierter Deckenstrukturen rasch und ohne weiteres möglich.

Selbst für den Fall, dass eine Anordnung der Träger- und Montagekanäle unterhalb der Decke zu ändern ist, ist der damit verbundene Aufwand verglichen mit dem Aufwand zum Ändern eines Unterflurinstallationssystems gering. Dabei ist von Vorteil, dass die Kabel in die Träger- und Montagekanäle eingelegt werden können und nicht durch geschlossene Kanäle gezogen werden müssen. Dieses ist aufgrund des Freiraumes zwischen den abgehängten Träger- und Montagekanälen und der Deckenunterseite ohne weiteres möglich.

Der im Zusammenhang dieser Ausführungen benutzte Begriff "abgehängte Decke" bzw. "deckenseitig abgehängte Träger- und Montagekanäle" umfasst auch solche Ausgestaltungen, bei denen die Träger- und Montagekanäle und/oder die Deckenunterseite nur in einem geringen Abstand zur eigentlichen tragenden Decke angeordnet sind, jedoch letztendlich deckenseitig und/oder wandseitig gehalten sind.

Die Träger- und Montagekanäle können ein- oder mehrzügig ausgestaltet sein. Gleichfalls können die Träger- und Montagekanäle ausgebildet sein, um einen zwei- oder mehrzügigen Geräteeinbau zu ermöglichen. Gleichfalls können Träger- und Montagekanäle eingesetzt werden, die an zumindest einer Seite den einen Teil komplementärer Verbindungselemente tragen, um diesen Träger- und Montagekanal seitlich an einen anderen Träger- und Montagkanal anschließen zu können. Bei diesen komplementären Verbindungselementen kann es sich beispielsweise um eine hinterschnittene Nut- und Federverbindung handeln.

Nachfolgend ist die Erfindung anhand von Ausführungsbeispielen unter Bezugnahme auf die beigefügten Figuren beschrieben. Es zeigen:
- **Fig. 1:**: einen schematisierten Querschnitt durch eine erste Einrichtung zum Anschließen von Arbeitsplätzen an ein Energie-, Daten- und/oder Kommunikationsnetz,
- **Fig. 2:**: eine weitere Einrichtung entsprechend derjenigen der Figur 1 in einer Abwandlung,
- **Fig. 3:**: noch eine weitere Abwandlung der Einrichtung der Figur 1,
- **Fig. 4:**: eine schematisierte Querschnittsdarstellung einer weiteren Einrichtung zum Anschließen von Arbeitsplätzen an ein Energie-, Daten- und/oder Kommunikationsnetz,
- **Fig. 5:**: eine schematisierte Querschnittsdarstellung durch noch eine weitere Einrichtung zum Anschließen von Arbeitsplätzen an ein Energie-, Daten- und/oder Kommunikationsnetz,
- **Fig. 6:**: die Einrichtung der Figur 5 mit einer anderen Bestückung und
- **Fig. 7:**: eine schematisierte perspektivische Darstellung einer weiteren Einrichtung zum Anschließen von Arbeitsplätzen an ein Energie-, Daten- und/oder Kommunikationsnetz.

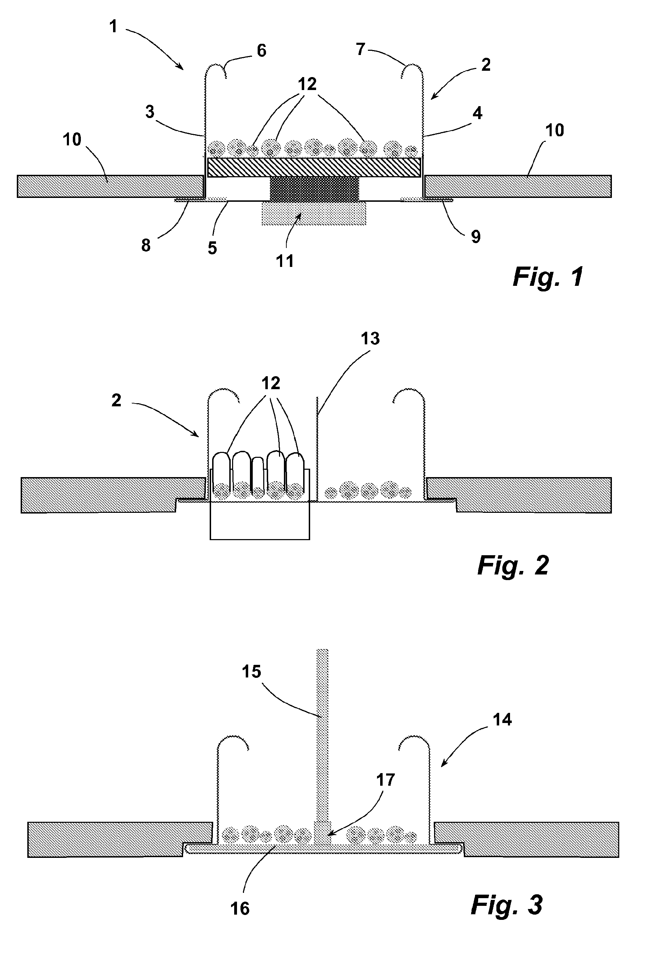

Eine Einrichtung 1 zum Anschließen von in einem Raum eines Gebäudes befindlichen Arbeitsplätzen an ein Energie-, Daten- und/oder Kommunikationsnetz, umfasst einen Träger- und Montagekanal 2. Der Träger- und Montagekanal 2 ist bei dem in Figur 1 dargestellten Ausführungsbeispiel ein gekantetes Blech. Der Träger- und Montagekanal 2 verfügt als Seitenteile über zwei Seitenwände 3, 4, die durch einen Steg 5 miteinander verbunden sind. Der Steg 5 stellt bei dem in Figur 1 dargestellten Ausführungsbeispiel den unteren Abschluss des Träger- und Montagekanals 2 dar. Zur Versteifung der Seitenwände 3, 4 weisen diese oberseitig eine U-förmig nach innen gerichtete Biegung 6, 7 auf. Im Bereich des Steges 5 sind an die Außenseite der Seitenwände 3, 4 Stützschenkel 8, 9 angeformt, die ihrerseits zum Tragen von Deckenelementen 10 einer abgehängten Decke dienen. Die Einrichtung 1 ist bei dem dargestellten Ausführungsbeispiel Teil einer abgehängten Decke, wobei der Einfachheit halber die Aufhängung der Decke, die über den Träger- und Montagekanal 2 erfolgt, nicht dargestellt ist. Ebenfalls nicht dargestellt sind quer zum Träger- und Montagekanal 2 verlaufende Querträger, die bei dem dargestellten Ausführungsbeispiel eine dem dargestellten Träger- und Montagekanal 2 entsprechende Querschnittsprofilierung aufweisen.

Der Träger- und Montagekanal 2 umfasst zur Leitungsführung einen Kanal, der bei den dargestellten Ausführungsbeispiel durch die Oberseiten des Steges und die Seitenwände 3, 4 gebildet ist. Darüber hinaus verfügt der Träger- und Montagekanal 2 über Montageelemente. Als Montageelemente dienen bei dem dargestellten Ausführungsbeispiel in regelmäßigen Abständen vorgesehene Durchbrechungen in dem Steg 5. Letztendlich dienen die eine solche Durchbrennung begrenzenden Ränder als Montageelemente, an denen eine Anschlussdose befestigt werden kann. In der in Figur 1 gezeigten Schnittebene ist in eine solche Durchbrechung eine Anschlussdose 11 als Einbaugerät eingesetzt und mechanisch an den Träger- und Montagekanal 2 angeschlossen. Dieses kann beispielsweise mittels einer Clipsverbindung vorgesehen sein. Die Anschlussdose 11 ist in nicht näher dargestellter Art und Weise elektrisch kontaktiert mit einigen der in Figur 1 gezeigten Kabel 12. Zur Leistungsführung ist bei diesem Ausführungsbeispiel vorgesehen, dass oberhalb des Steges 5 bzw. oberhalb der in den Steg 5 eingebauten Geräte, beispielsweise der Anschlussdose 11 eine Brandschutzplatte 13 angeordnet ist, auf die Kabel 12 verlegt sind. Mithin dient der Träger- und Montagekanal 2 auch zur Leitungsführung. Die an einige dieser Leiter angeschlossene Anschlussdose 11 bildet eine Schnittstelle, über die ein Arbeitsplatz an das Energie-, Daten- und/oder Kommunikationsnetz des Gebäudes angeschlossen werden kann.

Ohne weiteres kann die Anschlussdose 11 aus der Durchbrechung des Steges 5, in der diese aktuell eingebaut ist, herausgenommen werden und an anderer Stelle in den Steg 5 wieder eingesetzt werden. Die Durchbrechung des Steges 5 wird man nach Entfernen der Anschlussdose 11 zweckmäßigerweise mit einem Blinddeckel verschließen, wenn in die Durchbrechungen nicht ein anderes Einbaugerät eingesetzt werden soll. Somit kann die Anschlussdose 11 ohne weiteres versetzt werden, sollte dieses notwendig sein und sollte der Träger- und Montagekanal 2 nicht ohnehin in Abständen Anschlussdosen aufweisen.

Anstelle oder auch zusammen mit einer solchen Anschlussdose können in unterschiedliche Durchbrechungen des Steges 5, wobei, worauf bereits hingewiesen worden ist, der Rand einer solchen Durchbrechung als Montageelement im Sinne dieser Ausführungen dient, auch andere Einbaugeräte eingebaut werden, die dann ihrerseits an eine Energie- oder Datenleitung angeschlossen werden können, Hierbei kann es sich um unterschiedliche Geräte der Gebäudetechnik handeln, wie beispielsweise Sensoren, etwa Bewegungssensoren, Helligkeitssensoren, Kameras oder dergleichen.

Figur 2 zeigt in einer Variation den Träger- und Montagekanal 2, in den eine Trennwand 13 eingebaut ist. Die Trennwand 13 dient zum Trennen unterschiedlicher Leitungen. Somit kann durch die Trennwand 13 beispielsweise zur Trennung der Energieleitungen von den Daten- und/oder Kommunikationsleitungen dienen.

Figur 3 zeigt eine weitere Variante des in Figuren 1 und 2 beschriebenen Träger- und Montagekanals. Dieser ist in Figur 3 mit dem Bezugszeichen 14 gekennzeichnet. Der Träger- und Montagekanal 14 ist in der dargestellten Abbildung ohne Anschlussdose oder Einbaugerät wiedergegeben. Anhand der Abbildungen in Figur 3 soll beispielhaft dargestellt werden, wie ein Träger- und Montagekanal 14 deckenseitig abgehängt werden kann, wobei bei dem Ausführungsbeispiel der Figur 3 eine Mittenabhängung mittels eines Stabes 15 vorgeschlagen ist. Der an der Unterseite der Decke befestigte Stab 15 greift ein in ein Tragestück 16. Das Tragestück 16 ist T-förmig ausgebildet und greift in seiner den Träger- und Montagekanal 14 tragenden Stellung mit seinen freien Enden in im Bereich des unteren Abschlusses des Träger- und Montagekanals 14 vorhandene Aufnahmen ein. Zum Anschließen dient eine zentrisch vorgesehene Aufnahme 17, in die der Stab 15 eingreift und formschlüssig darin gehalten ist. Das Trägerstück 16 ist um die Achse des Stabes 15 verschwenkbar und kann auf diese Weise in seine in Figur 3 gezeigte Stellung den Träger- und Montagekanal 14 tragende Stellung gebracht werden oder auch aus dieser befreit werden.

In analoger Weise ist die Abhängung eines solchen Träger- und Montagekanals von einer Gebäudewand möglich.

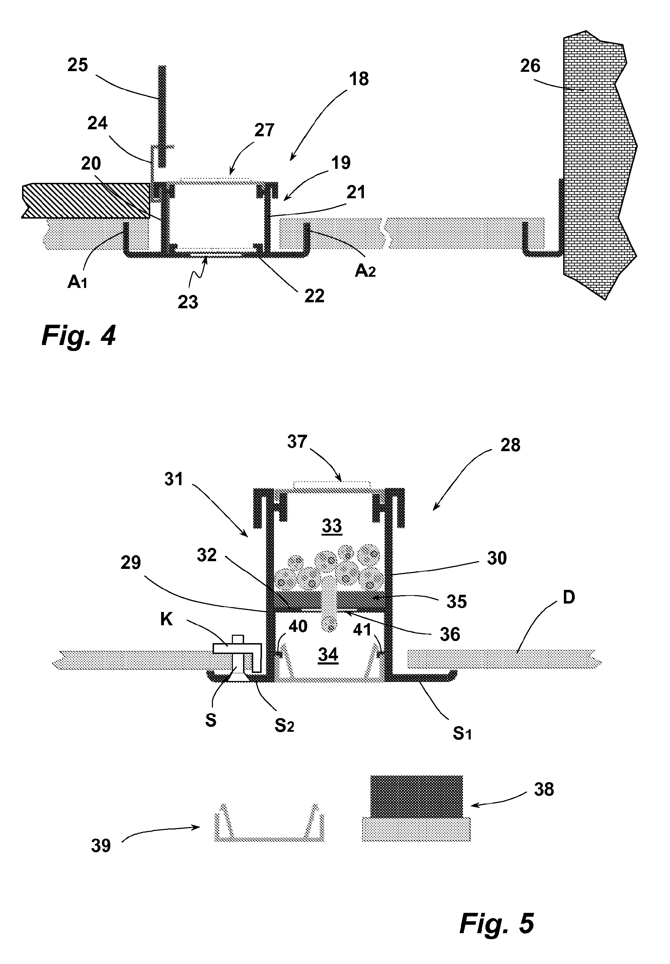

Eine weitere Einrichtung zum Anschließen von in einem Raum befindlichen Arbeitsplätzen an ein Energie-, Daten- und/oder Kommunikationsnetz ist in Figur 4 gezeigt. Die Einrichtung ist darin mit dem Bezugszeichen 18 gekennzeichnet. Die Einrichtung 18 weist als Träger- und Montagekanal 19 ein Aluminiumstrangpressprofil auf, welches prinzipiell aufgebaut ist wie der Träger- und Montagekanal 2 der Figur 1. Auch bei der Ausgestaltung der Figur 4 sind in Abständen in den die Seitenwände 20, 21 verbindenden Steg 22 Durchbrechungen 23 zum Einsetzen einer Anschlussdose oder eines anderen Einbaugerätes vorgesehen. Bei diesem dargestellten Ausführungsbeispiel erfolgt eine Aufhängung des Kanals 19 mittels eines seitlichen Kanalaufhängers 24, der seinerseits an eine deckenseitig befestigte Gewindestange 25 angeschlossen ist. Bei diesem Ausführungsbeispiel weisen die zum Tragen von Deckenelementen vorgesehnen Schützschenkel jeweils eine nach oben gerichtete Abkantung A₁ bzw. A₂ auf. Diese wird bei dem dargestellten Ausführungsbeispiel genutzt, um ein Rasterelement als Deckenelement zu befestigen. Figur 4 zeigt ferner, wie ein Anschluss an eine Wand 26 eines Rasterdeckenelementes erfolgen kann. Bei einem solchen Rasterdeckenelement handelt es sich um hochkant stehende Lamellen.

Bei diesem Ausführungsbeispiel ist vorstehen, dass der Träger- und Montagekanal 19 oberseitig durch einen Deckel 27, vorzugsweise aus Stahl, verschlossen ist, der in eine Profilierung des oberen Abschlusses der Seitenwände 20, 21 eingreift. Zur besseren Wärmeableitung ist der Deckel 27 in Abständen mit einer Kiemenlochung versehen.

Noch eine weitere Einrichtung der in Rede stehenden Art ist schematisiert in Figur 5 in einem Querschnitt gezeigt. Bei dieser Einrichtung 28 sind die Seitenwände 29, 30 des Träger- und Montagekanals 31 durch einen zwischen dem oberen Abschluss und dem unteren Abschluss der Seitenwände 29, 30 angeordneten Steg 32 miteinander verbunden. Das Querschnittsprofil des Träger- und Montagekanals 31 ist somit H-förmig ausgebildet. Der Steg 32 teilt den durch die Seitenwände 29, 30 eingefassten Innenraum in einen oberen Teilkanal 33 und einen unteren Teilkanal 34. Der obere Teilkanal 33 dient zur Leitungsführung und somit als Kanal im Sinne des Gegenstandes der beschriebenen Erfindung, wobei die Leitungen bei diesem Ausführungsbeispiel aus Brandschutzgründen auf einer auf dem Steg 32 aufgelegten Brandschutzplatte 35 aufliegen. Der Steg 32 weist in Abständen Durchbrechungen 36 auf. Diese dienen zum Durchführen eines oder mehrerer Kabel aus dem Teilkanal 33 in den Teilkanal 34 oder umgekehrt. Der der Leitungsführung dienende Teilkanal 33 ist oberseitig durch eine Abdeckung 37 verschlossen. Der untere Teilkanal 34 dient zur Aufnahme von Einbaugeräten, wie beispielsweise einer Anschlussdose 38, die in der Darstellung der Figur 5 außerhalb der Einrichtung 28 dargestellt ist. Neben der Anschlussdose 38 ist eine Verschlussleiste 39 abgebildet, die zum Verschließen der unteren Öffnung des Teilkanals 34 dient. Tatsächlich ist der untere Teilkanal 34 durch eine solche Verschlussleiste 39 verschlossen. Zum Anbringen der Verschlussleiste 39 - gleiches gilt für die an dem Träger- und Montagekanal 31 anzubringenden Einbaugeräte - dienen von den Seitenwänden 29, 30 nach innen abragende Rippen 40, 41 mit einer hakenförmigen Verkröpfung am freien Ende. Die Rippen 40, 41 dienen als Montageelemente und erstrecken sich über die gesamte Längserstreckung des Träger- und Montagekanals 31.

Auf dem rechten Stützschenkel S₁ des Träger- und Montagekanals 31 ist zur Ausbildung einer abgehängten Decke beispielhaft eine Deckenplatte D aufgelegt. Der andere Stützschenkel S₂ des Träger- und Montagekanals 31 dient zusammen mit einer Klemmleiste K, um ein anderes Deckenelement an dem Träger- und Montagekanal 31 anzuschließen. Zum Anschließen des weiteren Deckenelementes, bei dem es sich beispielsweise um ein Segel handeln kann, dient eine den Stützschenkel S₂ durchgreifende Schraube S, die mit ihrem Schraubenschaft in einer Gewindebohrung der Klemmleiste K festgesetzt ist. Dieses macht deutlich, dass die Stützschenkel der in diesen Ausführungen beschriebenen Träger- und Montagekanäle unterschiedlich funktional ausgestaltet sein können, um daran unterschiedliche abgehängte deckenbildende Elemente anschließen zu können.

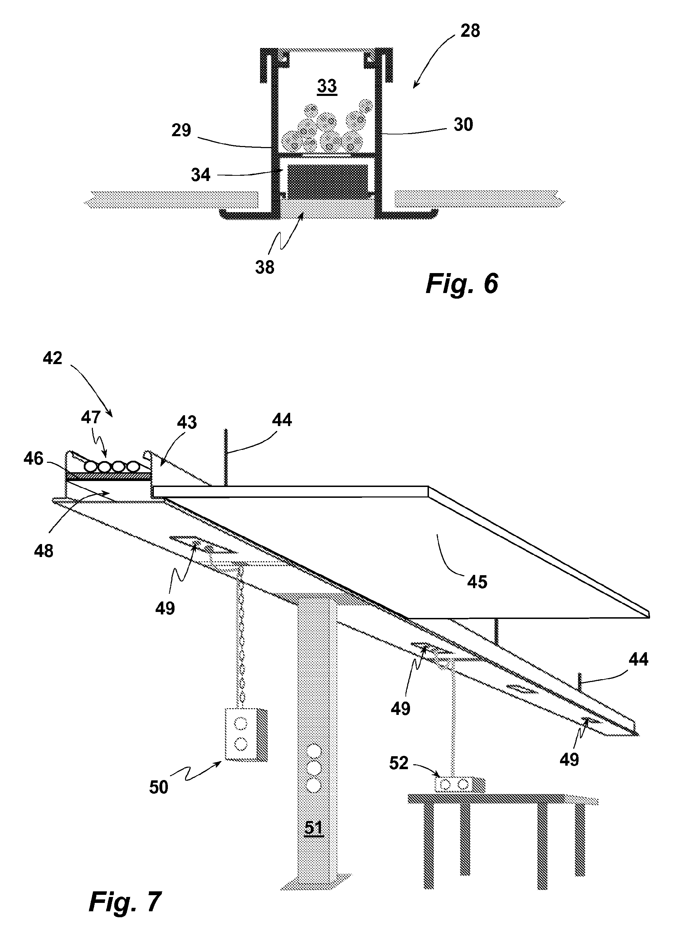

Figur 6 zeigt die Einrichtung 28 mit einer anderen Bestückung. In den unteren Teilkanal 34 ist zwischen den Seitenwänden 29, 30 die Anschlussdose 38 eingebaut. Die Anschlussdose 38 ist in nicht dargestellter Weise an einzelne in dem Teilkanal 33 verlaufende Kabel angeschlossen. Die Anschlussdose 38 dient gleichzeitig als Zugentlastungsmodul.

In gleicher Weise wie die Anschlussdose 38 können gleichartige Einsätze verwendet werden, um unterschiedliche Geräte an dem Träger- und Montagekanal anzuschließen, wie beispielsweise aufgesetzte Leuchten. Sensoren oder dergleichen können ebenso wie die Anschlussdose 38 in den unteren Teilkanal 34 des Träger- und Montagekanals integriert bzw. an diesem befestigt werden.

Figur 7 zeigt eine weitere Einrichtung 42 zum Anschließen von in einem Raum befindlichen Arbeitsplätzen an ein Energie-, Daten- und Kommunikationsnetz. Ein Träger- und Montagekanal 43 ist mit Stäben 44 von der Raumdecke abgehängt. Der Träger- und Montagekanal 43 dient ebenfalls zum Tragen von Deckenplatten 45, wie dieses in den vorangegangenen Ausführungsbeispielen beschrieben ist. Beispielhaft ist in Figur 7 eine Deckenplatte 45 dargestellt. Der Träger- und Montagekanal 43 ist durch einen Steg 46 in einen oberen Teilkanal 47 und einen unteren Teilkanal 48 geteilt. Der obere Teilkanal 47 dient der Leitungsführung; der untere Teilkanal zur Aufnahme von Einbaugeräte, wie beispielsweise von Anschlussdosen 49. Die Anschlussdosen 49 sind bei diesem Ausführungsbeispiel in eine die Seitenwände des Träger- und Montagekanals 43 verbindenden unteren Gurt eingebaut.

Schematisiert sind in Figur 7 mehrere Anschlussmöglichkeiten dargestellt, um die durch eine Anschlussdose 49 bereitgestellte Schnittstelle in Arbeitshöhe zu bringen. Als Möglichkeit dient beispielhaft eine Hängebox 50, eine sich vom Boden bis zur Unterseite des Träger- und Montagekanals 43 erstreckende Mediensäule 51 oder eine Tischbox 52. Selbstverständlich sind weitere Anschlussmöglichkeiten denkbar. Bei der Hängebox 50 und bei der Tischbox 52 ist für eine Zugentlastung gesorgt.

Insbesondere die Darstellung der Einrichtung 42 in der Figur 7 macht deutlich, dass an quasi beliebiger Stelle des Träger- und Montagekanals 43 eine Anschlussdose 49 oder auch andere Einbaugeräte angeordnet werden können. Daher können die Arbeitsplätze im Raum quasi an beliebiger Stelle angeordnet werden, ohne Rücksicht auf eine Anordnung zu bestimmten Anschlüssen nehmen zu müssen und dieses insbesondere ohne am Boden liegende Anschluss- oder Verbindungskabel in Kauf nehmen zu müssen.

Besonders vorteilhaft ist bei den beschriebenen Ausführungsbeispielen, dass die jeweils beschriebenen Träger- und Montagekanäle gleichzeitig zum Tragen von Deckenelementen dienen und diesen daher eine Mehrfachfunktion zukommt. Somit dient eine solche Einrichtung nicht nur zur Leitungsführung und als Montagegrund zum Einbau von Anschlussdosen und anderen elektrischen Einbaugeräten, sondern auch zum Tragen von Deckenplatten, Rasterdecken oder andere Deckenelemente zum Ausbilden einer abgehängten Decke. Die Träger- und Montagekanäle sind daher Teil einer solchen Decke. Insbesondere wird hierdurch ein einheitliches Äußeres erzielt.

Als zweckmäßig wird es angesehen, wenn als Einbaugeräte standardisierte Einbaugeräte eingesetzt werden, und zwar standardisiert hinsichtlich eines Einbaumaßes. Ohne weiteres kann durch Einlegen von Brandschutzplatten oder ähnlich wirkenden Elementen die in einem Träger- und Montagekanal geführten Leitungen ausreichend in beide Richtungen brandgeschützt angeordnet werden. Somit eignen sich diese Kanäle ebenfalls in Fluren oder dergleichen zum Tragen einer Notbeleuchtung oder einer Notausgangsbeschilderung.

Die beschriebenen Einrichtungen eignen sich insbesondere auch um daran Wegweiser durch Gebäude anzubringen oder eine bewegungsgesteuerte Beleuchtung in Räumen oder Fluren zu realisieren, da sowohl die Leuchten als auch die dazu notwendigen Sensoren gleichermaßen in Träger- und Montagekanäle eingebaut werden können.

Die in dem jeweiligen Kanal zur Leitungsführung verlegten Kabel müssen nicht notwendiger Weise elektrische Kabel sein. Auch andere Medien zur Datenübertragung, wie beispielsweise Licht leitende Kabel können in einem solchen Träger- und Montagekanal verlegt und an entsprechende Anschlussdosen angeschlossen sein.

Derartige Träger- und Montagekanäle können auch unmittelbar deckenseitig befestigt sein, für den Fall, dass nur eine geringe Raumhöhe zur Verfügung steht. In einem solchen Fall können die Träger- und Montagekanäle ebenfalls Elemente zum Anschließen und/oder Auflegen von einzelnen Deckenplatten ausgebildet sein, wie dieses beispielhaft in den Figuren beschrieben ist.

In einer weiteren Ausgestaltung ist vorgesehen, dass die Träger- und Montagekanäle unterseitig eine lösbare Abdeckung aufweisen, so dass eine Bestückung derselben auch von unten und somit, ohne Deckenelemente bewegen zu müssen, möglich ist. Bei einer solchen Ausgestaltung kann es sich anbieten, den Träger- und Montagekanal in einer Art zu konzipieren, dass dieser seitliche Taschen aufweist bzw. dass die unterseitige Abdeckung sich nur über einen Teil der Breite des Träger- und Montagekanals erstreckt.

In Ergänzung zu den Ausführungen betreffend das Material der Träger- und Montagekanäle, wie in der Figurenbeschreibung dargelegt, können die Kanäle auch als Materialverbund hergestellt sein. Bei einer solchen Ausgestaltung könnte vorgesehen sein, die Seitenwände eines solchen Träger- und Montagekanals beispielsweise aus Stahl, dagegen den die Seitenwände verbindenden Steg als Geräteeinbauprofil aus Aluminium zu fertigen. Zum Schutze der Installation bietet es sich an, die Seitenwände aus schlecht Wärme leitenden Werkstoffen herzustellen, um aus Brandschutzgründen eine Wärmeübertragung zu reduzieren. Selbstverständlich können auch andere Materialien zum Herstellen der Träger- und Montageprofile verwendet werden, wie beispielsweise Kanäle aus einem Carbonfaserverbundwerkstoff. Diese weisen nicht nur eine sehr hohe mechanische Belastbarkeit auf, sondern genügen ebenfalls den brandsicherheitstechnischen Anforderungen.

### Bezugszeichenliste

| | | | |
|---|---|---|---|
| 1 | Einrichtung | 31 | Träger- und Montagekanal |
| 2 | Träger- und Montagekanal | 32 | Steg |
| 3 | Seitenwand | 33 | Teilkanal |
| 4 | Seitenwand | 34 | Teilkanal |
| 5 | Steg | 35 | Brandschutzplatte |
| 6 | Biegung | 36 | Durchbrechung |
| 7 | Biegung | 37 | Abdeckung |
| 8 | Stützschenkel | 38 | Anschlussdose |
| 9 | Stützschenkel | 39 | Verschlussleiste |
| 10 | Deckenelement | 40 | Rippe |
| 11 | Anschlussdose | 41 | Rippe |
| 12 | Kabel | 42 | Einrichtung |
| 13 | Trennwand | 43 | Träger- und Montagekanal |
| 14 | Träger- und Montagekanal | 44 | Stab |
| 15 | Stab | 45 | Deckenplatte |
| 16 | Trägerstück | 46 | Steg |
| 17 | Aufnahme | 47 | Teilkanal |
| 18 | Einrichtung | 48 | Teilkanal |
| 19 | Träger- und Montagekanal | 49 | Anschlussdose |
| 20 | Seitenwand | 50 | Hängebox |
| 21 | Seitenwand | 51 | Mediensäule |
| 22 | Steg | 52 | Tischbox |
| 23 | Durchbrechung | | |
| 24 | Kanalaufhänger | A₁ | Abkantung |
| 25 | Gewindestange | A₂ | Abkantung |
| 26 | Wand | D | Deckenplatte |
| 27 | Deckel | S | Schraube |
| 28 | Einrichtung | S₁ | Stützschenkel |
| 29 | Seitenwand | S₂ | Stützschenkel |
| 30 | Seitenwand | K | Klemmleiste |

## Patentansprüche

1. Einrichtung zum Anschließen von in einem Raum eines Gebäudes befindlichen Arbeitsplätzen an ein Energie-, Daten- und/oder Kommunikationsnetz, umfassend,
- wenigstens einen von einer Raumdecke abgehängten, aus zwei miteinander durch wenigstens einen Steg (5, 22, 32, 46) verbundenen Seitenteilen (3, 4; 20, 21; 29, 30) gebildeten Träger- und Montagekanal (2, 14, 19, 31, 43) mit wenigsten einem Kanal zur Leitungsführung und mit Montageelementen (23; 40, 41), an denen Einbaugeräte mechanisch an den Träger- und Montagekanal (2, 14, 19, 31, 43) anschließbar sind,
- ein oder mehrere in dem Träger- und Montagekanal (2, 14, 19, 31, 43) geführte Kabel (12) eines Energie-, Daten- und/oder Kommunikationsnetzes und
- zumindest eine an einem oder mehreren Befestigungselementen des Träger- und Montagekanals (2, 14, 19, 31, 43) mechanisch angeschlossene und mit dem Energie-, Daten- und/oder Kommunikationsnetz verbundene Anschlussdose (11, 38, 49) als einem Arbeitsplatz zugeordnete Schnittstelle zur Erlangung eines Zuganges zu dem Energie-, Daten- und/oder Kommunikationsnetz.

2. Einrichtung nach Anspruch 1, **dadurch gekennzeichnet, dass** der zur Leitungsführung vorgesehene Kanal durch einen die Seitenwände (3, 4; 20, 21; 29, 30) verbindenden Steg (5, 22, 32, 46) und durch die Seitenwände oder durch Seitenwandabschnitte gebildet ist.

3. Einrichtung nach Anspruch 2, **dadurch gekennzeichnet, dass** auf dem Steg (32) eine Brandschutzplatte (35) angeordnet ist.

4. Einrichtung nach einem der Ansprüche 1 bis 3, **dadurch gekennzeichnet, dass** an den Befestigungselementen des Träger- und Montagekanals weitere Geräte mechanisch angeschlossen sind, wie etwa Leuchten, Sensoren, Kameras oder dergleichen.

5. Einrichtung nach einem der Ansprüche 1 bis 4, **dadurch gekennzeichnet, dass** ein die Seitenwände verbindender Steg (5, 22) die Unterseite des Träger- und Montagekanals bildet (2, 14, 19) und in diesen in Abständen Aussparungen oder Durchbrechungen (23) zum Einsetzen einer Anschlussdose oder eines Einbaugerätes eingebracht sind.

6. Einrichtung nach einem der Ansprüche 1 bis 4, **dadurch gekennzeichnet, dass** die Befestigungselemente (40, 41) an den nach innen weisenden Seiten der Seitenteile (29, 30) des Träger- und Montagekanals (31) angeordnet sind.

7. Einrichtung nach Anspruch 6, **dadurch gekennzeichnet, dass** die Befestigungselemente in Längserstreckung des Kanals folgende Strukturen, wie etwa Rippen (40, 41) und/oder Nuten sind.

8. Einrichtung nach Anspruch 6 oder 7, **dadurch gekennzeichnet, dass** ein Steg (32) die Seitenwände (39, 30) im Bereich zwischen deren oberen und deren unteren Abschluss verbindet und **dadurch** der Kanal (31) in einen oberen Teilkanal (33) und in einen unteren Teilkanal (34) geteilt ist, wobei die Befestigungselemente (40, 41) in dem unteren Teilkanal (34) angeordnet sind, während der obere Teilkanal (33) zur Leitungsführung dient.

9. Einrichtung nach Anspruch 8, **dadurch gekennzeichnet, dass** der die Teilkanäle (33, 34) bildende Steg (32) in Abständen Durchbrechungen (36) zum Durchführen von Leitungen und/oder zum Anschließen des Träger- und Montageprofils (31) an einen an der Decke befestigten Abhänger aufweist.

10. Einrichtung nach einem der Ansprüche 1 bis 8, **dadurch gekennzeichnet, dass** an den Außenseiten der Seitenwände (3, 4; 20, 21; 29, 30) abragende Stege zum Auflegen von Deckenplatten (10, 45) und/oder zum anderweitigen Anschließen von Sichtblenden oder anderen Innenraumgestaltungsmitteln, wie beispielsweise Segeln zum Ausbilden einer abgehängten Decke angeformt sind.

11. Einrichtung nach Anspruch 10, **dadurch gekennzeichnet, dass** die Einrichtung Teil einer abgehängten Decke ist und die Träger- und Montagekanäle (2, 14, 19, 31, 43) zumindest teilweise in das Tragen der abgehängten Deckenelemente eingebunden sind.

12. Träger- und Montagekanal für eine Einrichtung zum Anschließen von in einem Raum eines Gebäudes befindlichen Arbeitsplätzen an ein Energie-, Daten- und/oder Kommunikationsnetz, gebildet aus zwei miteinander durch wenigstens einen Steg (5, 22, 32, 46) verbundenen Seitenteilen (3, 4; 20, 21; 29, 30), umfassend einen Kanal zur Leitungsführung und Montageelemente (23; 40, 41), an denen Einbaugeräte mechanisch an den Träger- und Montagekanal (2, 14, 19, 31, 43) anschließbar sind sowie den Außenseiten der Seitenwände (3, 4; 20, 21; 29, 30) zugeordnete Verbindungsmittel, etwa Stege zum Auflegen von Deckenplatten (10, 45) und/oder zum anderweitigen Anschließen von Sichtblenden oder anderen Innenraumgestaltungsmitteln, wie beispielsweise Segeln zum Ausbilden einer abgehängten Decke angeformt sind.

13. Träger- und Montageprofil nach Anspruch 12, **dadurch gekennzeichnet, dass** ein Abschnitt eines Träger- und Montagekanals mit Leitungen sowie mit der zumindest einem Anschlussdose und gegebenenfalls weiteren Einbaugeräten vorinstalliert ist.

14. Träger- und Montageprofil nach Anspruch 13, **dadurch gekennzeichnet, dass** das Träger- und Montageprofil an seinen Stößen zum Verbinden mit einem weiteren Träger- und Montagekanal mechanische und elektrische Steckverbindungsteile zum In-Eingriff-Stellen dieser Steckverbindungsteile mit komplementären Steckverbindungsteilen des mit diesem Träger- und Montageprofil zu verbindenden Träger- und Montagekanals aufweist.

15. Träger- und Montageprofil nach Ansprüche 12 bis 13, **dadurch gekennzeichnet, dass** das Träger- und Montageprofil (2, 14, 19, 31, 43) ein oder mehrere Merkmale der in den Ansprüchen 2 bis 9 genannten Merkmale aufweist, die sich auf den Träger- und Montagekanal (2, 14, 19, 31, 43) beziehen.
